# EUROPÄISCHE PATENTSCHRIFT

(11) **EP 3 656 993 B1**
(45) Veröffentlichungstag und Bekanntmachung des Hinweises auf die Patenterteilung: **21.08.2024**
(21) Anmeldenummer: 19207768.3
(22) Anmeldetag: 07.11.2019
(51) Int. Cl.: F02B 33/34, F02B 37/16, F02D 41/00, F02D 41/22, F02M 35/10, F02D 23/00, F02D 9/02

(54) **VERFAHREN ZUR DIAGNOSE EINER AUFGELADENEN BRENNKRAFTMASCHINE HINSICHTLICH EINER LECKAGE IN EINEM ABSCHNITT DES FRISCHGASSTRANGS**
METHOD FOR DIAGNOSING A LOADED COMBUSTION ENGINE IN TERMS OF A LEAKAGE IN A SECTION OF THE FRESH GAS SECTION
PROCÉDÉ DE DIAGNOSTIC D'UN MOTEUR À COMBUSTION INTERNE CHARGÉ CONCERNANT UNE FUITE DANS UNE SECTION DU CONDUIT DE GAZ FRAIS

(30) Priorität: 21.11.2018 DE 102018219970
(43) Veröffentlichungstag der Anmeldung: 27.05.2020
(73) Patentinhaber: VOLKSWAGEN AKTIENGESELLSCHAFT, 38440 Wolfsburg (DE)
(72) Erfinder: Hauptvogel, Mathias, 39356 Weferlingen (DE); Berski, Fabian, 30163 Hannover (DE)

(56) Entgegenhaltungen:
- EP-A1- 3 569 847
- WO-A1-2009/150057
- WO-A1-2018/131152
- DE-A1- 10 300 592
- DE-A1- 102004 036 064
- DE-A1- 102013 218 612
- DE-A1- 102016 217 921
- DE-C1- 10 065 474
- FR-A3- 2 985 544
- US-A1- 2017 328 810

## Beschreibung

Die Erfindung betrifft ein Verfahren zur Diagnose einer aufgeladenen Brennkraftmaschine hinsichtlich einer Leckage in einem Abschnitt des Frischgasstrangs.

Brennkraftmaschinen, die zum Antrieb von Kraftfahrzeugen vorgesehen sind, werden üblicherweise aufgeladen, um die spezifische Leistungsabgabe zu erhöhen und um den spezifischen Kraftstoffverbrauch zu senken. Weit verbreitet ist eine Aufladung von Brennkraftmaschinen mittels eines oder mehrerer Abgasturbolader. Diese umfassen eine Abgasturbine mit einem Turbinenlaufrad, das von Abgas, das von einem Verbrennungsmotor der Brennkraftmaschine ausgestoßen wurde, angeströmt und dadurch drehend angetrieben wird. Das Turbinenlaufrad treibt über eine Welle ein Verdichterlaufrad eines Frischgasverdichters an, der in einen Frischgasstrang des Verbrennungsmotors integriert ist und dadurch das Frischgas verdichtet. Alternativ kann ein solcher Frischgasverdichter auch mittels eines anderen Antriebs, beispielsweise von dem Verbrennungsmotor selbst oder von einem elektrischen Antriebsmotor, angetrieben werden. Durch die Verdichtung können u.a. die Menge des in die Brennräume des Verbrennungsmotors eingebrachten Frischgases und damit die Mengen des jeweils in einem Arbeitsspiel in den Brennräumen umsetzbaren Kraftstoffs erhöht werden.

Die Antriebsdrehzahl eines Verdichterlaufrads hängt nicht nur von der hierfür zur Verfügung gestellten Antriebsleistung sondern ebenso von dem Antriebswiderstand ab. Dieser Antriebswiderstand hängt wiederum direkt von dem Ladedruck in der Ladeluftstrecke, d.h. von dem Druck des Frischgases in demjenigen Abschnitt des Frischgasstrangs, der zwischen dem Frischgasverdichter und dem Verbrennungsmotor liegt, ab. Eine Begrenzung der Betriebsdrehzahl des Frischgasverdichters (und damit bei einem Abgasturbolader auch einer dazugehörigen Abgasturbine) auf eine zulässige Maximaldrehzahl bedingt somit grundsätzlich, dass ein definierter Betriebszustand der Brennkraftmaschine mit u.a. einer konkreten Antriebsdrehzahl zu einem definierten Ladedruck führt. Eine solcher Zusammenhang kann in hinreichendem Maße abgeleitet werden, wenn die Ladeluftstrecke ausreichend dicht ist. Ist eine solche Dichtigkeit nicht in ausreichendem Maße gegeben, führt dies zu einem Druckverlust und damit zu einer Verringerung des Antriebswiderstands, was dann zu einem Überschreiten einer zulässigen Maximaldrehzahl des Frischgasverdichters führen kann.

Grundsätzlich besteht die Möglichkeit, eine Leckage in der Ladeluftstrecke eines Frischgasstrangs einer Brennkraftmaschine durch eine Druckmessung und dem Vergleich eines gemessenen Istwerts mit einem definierten Sollwert zu ermitteln. Dies ist prinzipbedingt jedoch lediglich in einem Betriebszustand möglich, in dem mittels des Verdichters tatsächlich ein Ladedruck erzeugt wird. Problematisch dabei ist, dass viele Brennkraftmaschinen, die für den Antrieb von Kraftfahrzeugen eingesetzt werden, sehr häufig nicht in solchen Betriebszuständen betrieben werden, in denen ein (hoher) Ladedruck vorliegt. Weiterhin ermöglicht ein solches Vorgehen lediglich eine Ermittlung einer Leckage in der Ladeluftstrecke des Frischgasstrangs.

Die DE 10 2005 024 984 A1 beschreibt eine Brennkraftmaschine mit einem Verbrennungsmotor, einem Frischgasstrang, einem in den Frischgasstrang integrierten Frischgasverdichter, einem Abgasstrang, einer in den Abgasstrang integrierten Abgasnachbehandlungsvorrichtung, einer Hochdruck-Abgasrückführung, einer Niederdruck-Abgasrückführung sowie jeweils einer Drosselklappe, die stromauf der Mündung der jeweiligen Abgasrückführung in den Frischgasstrang integriert ist. Bei einem Warmlauf und/oder in einem Schwachlastbetrieb der Brennkraftmaschine wird die Menge des durch den Frischgasstrang dem Verbrennungsmotor zugeführten Frischgases mittels der Drosselklappen gedrosselt, um die Abgastemperatur im Abgasstrang zur Verbesserung des Wirkungsgrads der Abgasnachbehandlungsvorrichtung zu erhöhen.

Die DE 10 2005 060 350 A1 offenbart ein Verfahren zur Regelung eines Verbrennungsprozesses einer Brennkraftmaschine mit Abgasrückführung, deren Verbrennungsmotor mit unterschiedlichen Luft-Kraftstoff-Verhältnissen betreibbar ist. Dabei wird sowohl die Menge der Frischluft als auch der rückgeführte Abgasstrom gezielt zugemessen, um eine präzise Bestimmung der Abgasrückführrate mit geringer Fehlertoleranz zu ermöglichen.

Auch die DE 10 2015 202 180 A1 beschreibt ein Verfahren, mittels der die Menge der einem mit Abgasrückführung betriebenen Verbrennungsmotor zugeführten Luft geregelt wird.

Die DE 10 2004 036 064 A1 offenbart ein Diagnoseverfahren zur Erkennung von Fehlern bei der Ladedruckregelung eines Verbrennungsmotors mit einem Abgasturbolader und mit einem dem Abgasturbolader vorgeschalteten mechanischen Kompressor. Hierzu wird gemäß einer ersten Alternative für einen kombinierten Turbolader- und Kompressorbetrieb mit Hilfe von Drucksensoren mindestens ein Saugrohrdruck des Verbrennungsmotors, ein Druck zwischen dem Kompressor und einem Verdichter des Turboladers sowie ein Druck zwischen dem Verdichter des Turboladers und dem Verbrennungsmotor und vorzugsweise auch ein äußerer Umgebungsdruck gemessen. Zumindest ein Teil der gemessenen Drücke bzw. ein anhand dieser Drücke ermittelter Luftmassenfluss wird mit entsprechenden modellierten Drücken bzw. mit einem entsprechenden Modellmassenstrom für einen leckagefreien Betrieb verglichen.

Die WO 2009/150057 A1 offenbart ein Verfahren zum Diagnostizieren eines Ansaugtrakts einer Brennkraftmaschine, wobei in Abhängigkeit von dem Ladedruck, den ein Verdichter stromabwärts in dem Ansaugtrakt erzeugt, auf einen Fehler des Ansaugtrakts, beispielsweise auf eine Leckage, geschlossen wird.

Die WO 2018/131152 A1 offenbart gemäß der daraus abgeleiteten EP 3 569 847 A1 eine Brennkraftmaschine mit einer Regelklappe, die stromauf eines Verdichters in einen Frischgasstrang der Brennkraftmaschine integriert ist. Die Regelklappe wird zur Erzeugung eines Druckgefälles über einer Abgasrückführleitung genutzt.

Der Erfindung lag die Aufgabe zugrunde, eine vorteilhafte Möglichkeit zur Diagnose einer Brennkraftmaschine hinsichtlich des Vorliegens oder des Nicht-Vorliegens einer Leckage des Frischgasstrangs anzugeben.

Diese Aufgabe wird mittels eines Verfahrens gemäß dem Patentanspruch 1 gelöst. Vorteilhafte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist ein Verfahren zur Diagnose einer Brennkraftmaschine vorgesehen, wobei die Brennkraftmaschine zumindest einen Verbrennungsmotor (insbesondere einen (selbstzündenden und qualitätsgeregelten) Dieselmotor oder einen (fremdgezündeten und quantitätsgeregelten) Ottomotor oder eine Kombination daraus, d.h. z.B. einen Verbrennungsmotor mit homogener Kompressionszündung) und einen Frischgasstrang, über den dem Verbrennungsmotor Frischgas zuführbar ist, umfasst. In den Frischgasstrang sind weiterhin zumindest ein Frischgasverdichter und, stromauf (bezüglich einer Strömung von Frischgas in Richtung des Verbrennungsmotors) des Frischgasverdichters, eine Steuerklappe integriert. In einem Betriebszustand der Brennkraftmaschine wird die Steuerklappe so weit (teilweise oder vollständig beziehungsweise so weit wie möglich) geschlossen, dass mittels des laufenden Verbrennungsmotors in dem zwischen der Steuerklappe und dem Verbrennungsmotor liegenden Abschnitt des Frischgasstrangs ein Unterdruck im Vergleich zu dem Umgebungsdruck erzeugt wird, wobei ein diesem Unterdruck zugeordneter (gemessener) Istwert mit einem Sollwert verglichen wird und das Vorliegen oder das Nicht-Vorliegen einer Leckage in diesem Abschnitt des Frischgasstrangs aus einer gegebenenfalls vorhandenen Differenz zwischen dem Istwert und dem Sollwert abgeleitet wird. Dabei kann vorzugsweise vorgesehen sein, dass bei einer definiert eingestellten Stellung der Steuerklappe ein gemessener Druck-Istwert mit einem Druck-Sollwert verglichen wird, wobei eine über einem Grenzwert liegende Differenz zwischen diesem (gegebenenfalls größeren absoluten) Druck-Istwert und dem (gegebenenfalls kleineren absoluten) Druck-Sollwert als Leckage ermittelt wird. Dabei kann auch vorgesehen sein, einen Umfang der Leckage aus der Größe dieser Differenz abzuleiten. Alternativ besteht in vorteilhafter Weise die Möglichkeit, bei einem auf einen definierten Druckwert eingestellten Unterdruck eine Iststellung der Steuerklappe (in der diese gegebenenfalls in einem größeren Maße geschlossen ist) mit einer Sollstellung der Steuerklappe (in der diese gegebenenfalls in einem kleineren Maße geschlossen ist) zu vergleichen, wobei eine über einem Grenzwert liegende Differenz zwischen dieser Iststellung und der Sollstellung als Leckage ermittelt wird. Auch dabei kann vorgesehen sein, dass ein konkreter Umfang der Leckage beziehungsweise ein konkretes Maß für die Leckage aus dieser Differenz abgeleitet wird.

Als "Steuerklappe" wird erfindungsgemäß jede aktiv ansteuerbare Armatur verstanden, mittels der eine Mengenbeeinflussung einer in dem Frischgasstrang strömenden und über diese Steuerklappe geführten Gasströmung erzielt werden kann. Die Steuerklappe kann vorzugsweise in Form eines Klappenventils ausgebildet sein, kann jedoch auch andere Ausgestaltungen aufweisen.

Vorzugsweise kann vorgesehen sein, dass ein erfindungsgemäßes Verfahren beziehungsweise das Erzeugen des Unterdrucks durchgeführt wird, wenn sich die Brennkraftmaschine in einem Betriebszustand befindet, in dem mittels des Frischgasverdichters keine Ladedruckerzeugung bewirkt wird, weil dann durch das Schließen der Steuerklappe relativ schnell der vorgesehene Unterdruck erzeugt werden kann und dieser zudem relativ groß werden kann. Dadurch kann einerseits die Geschwindigkeit, mit der ein Ermittlungsergebnis erzielt werden kann, und andererseits die Genauigkeit des Ermittlungsergebnisses positiv beeinflusst werden. Ein Betriebszustand der Brennkraftmaschine ohne mittels des Frischgasverdichters bewirkter Ladedruckerzeugung zeichnet sich dadurch aus, dass kein höherer Frischgasdruck auf der Auslassseite im Vergleich zu der Einlassseite des Frischgasverdichters herrscht. Einen derartigen Betriebszustand stellt insbesondere ein Schubbetrieb der Brennkraftmaschine, wenn der Verbrennungsmotor keine Antriebsenergie abgibt sondern vielmehr aufnimmt, sowie ein Leerlaufbetrieb, wenn der Verbrennungsmotor mit einer Minimaldrehzahl Antriebsenergie bereitstellt, diese jedoch nicht abgegriffen wird, dar. Eine Durchführung in einem niedrigen Lastbereich im Betrieb des Verbrennungsmotors mit entsprechend geringem Saugrohrdruck ist ebenfalls möglich.

Vorzugsweise wird bei einer erfolgten Anforderung der Diagnose, was insbesondere mittels einer Steuerungsvorrichtung der Brennkraftmaschine erfolgt sein kann, mit der Durchführung eines erfindungsgemäßen Verfahrens beziehungsweise mit dem Erzeugen des Unterdrucks gewartet, bis unaufgefordert (d.h. nicht durch eine aktive Einstellung für den ausschließlichen Zweck der Diagnose) ein Betriebszustand der Brennkraftmaschine ohne Ladedruckerzeugung vorliegt. Es wird dann folglich so lange mit der Durchführung eines erfindungsgemäßen Verfahrens gewartet, bis die Brennkraftmaschine aufgrund einer entsprechenden Nutzung von einem Betreiber, insbesondere einem Fahrer eines Kraftfahrzeugs eines die Brennkraftmaschine umfassenden Kraftfahrzeugs, in einem entsprechenden Betriebszustand betrieben wird. Dadurch kann eine negative Beeinflussung des Betriebsverhaltens infolge eines aktiv (insbesondere mittels der Steuerungsvorrichtung) eingestellten Betriebszustands ohne Ladedruckerzeugung, der eigentlich nicht einem von dem Betreiber der Brennkraftmaschine angeforderten Betriebszustand entspricht, vermieden werden. Gegebenenfalls kann aber auch ein solches aktives Einstellen eines Betriebszustands der Brennkraftmaschine ohne Ladedruckerzeugung vorgesehen sein.

Ein erfindungsgemäßes Verfahren kann auch in vorteilhafter Weise bei einer Brennkraftmaschine zur Anwendung kommen, bei der in den Frischgasstrang eine Abgasrückführleitung mündet, die aus einem Abgasstrang abgeht, über den Abgas von dem Verbrennungsmotor abführbar ist. Dabei sollte jedoch während der Erzeugung des Unterdrucks ein in die Abgasrückführleitung integriertes Abgasrückführventil zumindest teilweise, vorzugsweise vollständig beziehungsweise so weit wie möglich geschlossen gehalten werden, um die Erzeugung des Unterdrucks nicht durch ein Einströmen von über die Abgasrückführleitung rückgeführtem Abgas zu erschweren beziehungsweise um eine Verfälschung des Ermittlungsergebnisses durch rückgeführtes Abgas zu vermeiden.

Die Abgasrückführleitung kann dabei einerseits für eine Hochdruck-Abgasrückführung vorgesehen sein, bei der das rückgeführte Abgas stromab (bezüglich der Strömung des Frischgases in dem Frischgasstrang in Richtung des Verbrennungsmotors) des Frischgasverdichters in den Frischgasstrang eingeleitet und gegebenenfalls, d.h. bei einer Ausgestaltung des Frischgasverdichters als Teil eines Abgasturboladers, stromauf (bezüglich der Strömung des von dem Verbrennungsmotor kommenden Abgases in dem Abgasstrang) einer in den Abgasstrang integrierten Abgasturbine des Abgasturboladers aus dem Frischgasstrang abgezweigt wird. Andererseits kann die Abgasrückführleitung auch für eine Niederdruck-Abgasrückführung, bei der das rückgeführte Abgas stromauf des Frischgasverdichters in den Frischgasstrang eingeleitet und gegebenenfalls stromab der in den Abgasstrang integrierten Abgasturbine abgezweigt wird, vorgesehen sein. Grundsätzlich können auch mindestens zwei Abgasrückführleitungen vorgesehen sein, von denen zumindest eine einer Hochdruck-Abgasrückführung und zumindest eine einer Niederdruck-Abgasrückführung dient.

Vorzugsweise kann vorgesehen sein, dass die Abgasrückführleitung oder zumindest eine der Abgasrückführleitungen in einen zwischen der Steuerklappe und dem Frischgasverdichter liegenden Abschnitt des Frischgasstrangs mündet und demnach insbesondere einer Niederdruck-Abgasrückführung dienen kann. Dabei kann auch vorgesehen sein, dass diese Abgasrückführleitung unmittelbar stromab und insbesondere in einem möglichst kurzen Abstand zu der Steuerklappe in den Frischgasstrang mündet, wodurch diese auch beziehungsweise primär im Betrieb der Brennkraftmaschine dazu dienen kann, im Bereich der Mündung der Abgasrückführleitung einen lokalen Unterdruck zu erzeugen, um einen ausreichend großen Strom von rückzuführendem Abgas über die Abgasrückführleitung zu gewährleisten.

Ein erfindungsgemäßes Verfahren kann in vorteilhafter Weise auch bei einer Brennkraftmaschine zur Anwendung kommen, bei der in den zwischen dem Frischgasverdichter und dem Verbrennungsmotor liegenden Abschnitt des Frischgasstrangs eine Drosselklappe integriert ist. Dabei sollte jedoch vorgesehen sein, dass die Drosselklappe während der Erzeugung des Unterdrucks zumindest teilweise, vorzugsweise vollständig beziehungsweise so weit wie möglich geöffnet gehalten wird, um zu ermöglichen, dass mittels des laufenden Verbrennungsmotors auch in dem zwischen der Steuerklappe und der Drosselklappe liegenden Abschnitt des Frischgasstrangs der Unterdruck erzeugt werden kann.

Bei einer Ausgestaltung des Verbrennungsmotors als Ottomotor kann diese Drosselklappe insbesondere dazu dienen, die Menge des dem oder den Brennräumen des Verbrennungsmotors zugeführten Frischgases zu steuern (d.h. für eine Quantitätsregelung des Ottomotors). Bei einer Ausgestaltung des Verbrennungsmotors als Dieselmotor kann die zumindest primäre Funktion der Drosselklappe darin bestehen, kurzfristig nach einem Beenden des Betriebs des Dieselmotors die Ladeluftstrecke zu verschließen, wodurch ein Nachströmen von bereits verdichtetem Frischgas in den oder die Brennräume des Dieselmotors vermieden werden kann. Dadurch soll ein ungewolltes Nachlaufen des Dieselmotors infolge von Selbstzündungen von Kraftstoffresten in den Brennräumen im Beisein von nachgeströmtem Frischgas verhindert werden. Sofern bei einer erfindungsgemäßen Brennkraftmaschine mit Drosselklappe auch eine Abgasrückführleitung für eine Hochdruck-Abgasrückführung vorhanden sein sollte, könnte die Drosselklappe auch zur Beeinflussung der Abgasrückführrate eingesetzt werden.

Wird im Rahmen der Durchführung eines erfindungsgemäßen Verfahrens eine Leckage des Frischgasstrangs ermittelt, kann vorzugsweise ein Fehlereintrag in einem Fehlerspeicher, beispielsweise in einem Fehlerspeicher einer Motorsteuerung der Brennkraftmaschine, generiert werden. Dieser Fehlereintrag kann dann unmittelbar oder zu einem späteren Zeitpunkt wieder ausgelesen werden, um Maßnahmen zur Behebung der Leckage und/oder zur Kompensation der Auswirkungen der Leckage zu initiieren.

Besonders bevorzugt kann vorgesehen sein, dass bei einer Erkennung einer Leckage Maßnahmen zur Begrenzung der Antriebsdrehzahl des Frischgasverdichters eingeleitet werden. Diese Maßnahmen können beispielsweise ein Einstellen einer Vorrichtung zur variablen Anströmung des Frischgasverdichters und/oder einer Vorrichtung zur variablen Anströmung einer Abgasturbine (VTG) und/oder eines Wastegateventils derart, dass diese bei einer ermittelten Leckage eine geringere Verdichtungsleistung erzeugt/erzeugen, als dies bei einer Einstellung der Fall wäre, die bei einer ermittelten Nicht-Leckage eingestellt würde, umfassen.

Ein besonderer Vorteil des erfindungsgemäßen Verfahrens liegt darin, dass dieses auch durchführbar ist beziehungsweise eine gutes Diagnoseergebnis liefert, wenn die Leckage so klein ist, dass deren Auswirkung in einem Normalbetrieb der Brennkraftmaschine mittels eines oder mehrerer Ladedruckregler, insbesondere mittels einer VTG und/oder eines Wastegateventils, automatisch ausgeglichen werden könnte/würde.

Eine im Rahmen eines erfindungsgemäßen Verfahrens genutzte Brennkraftmaschine kann insbesondere Teil eines Kraftfahrzeugs, insbesondere eines radbasierten und nicht schienengebundenen Kraftfahrzeugs, vorzugsweise ein PKW oder ein LKW, sein. Dabei kann die Brennkraftmaschine insbesondere zur direkten oder indirekten Bereitstellung der Antriebsleistung für das Kraftfahrzeug vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in der Zeichnungen dargestellten Ausführungsbeispiels näher erläutert. In der Zeichnung zeigt:

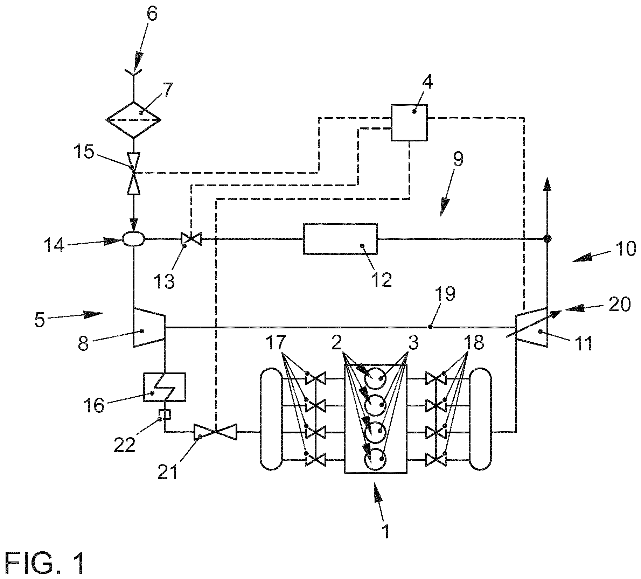

- Fig. 1:: in schematischer Darstellung eine zur Durchführung eines erfindungsgemäßen Verfahrens geeignete Brennkraftmaschine.

Die in der Fig. 1 dargestellte Brennkraftmaschine umfasst einen Verbrennungsmotor 1, der eine Mehrzahl von Zylindern 2 ausbildet. Die Zylinder 2 begrenzen gemeinsam mit darin auf und ab geführten Kolben 3 und einem Zylinderkopf (nicht dargestellt) Brennräume, in denen Frischgas gemeinsam mit Kraftstoff verbrannt wird. Der Kraftstoff wird dabei, gesteuert durch eine Steuerungsvorrichtung 4 (Motorsteuerung), mittels Injektoren (nicht dargestellt) direkt in die Brennräume eingespritzt. Das Verbrennen der Kraftstoff-Frischgas-Gemischmengen führt zu zyklischen Auf- und Ab-Bewegungen der Kolben 3, die wiederum in bekannter Weise über nicht dargestellte Pleuel auf eine ebenfalls nicht dargestellte Kurbelwelle übertragen werden, wodurch die Kurbelwelle rotierend angetrieben wird.

Das Frischgas wird dem Verbrennungsmotor 1 über einen Frischgasstrang 5 zugeführt. Dazu wird Luft über eine Ansaugmündung 6 aus der Umgebung angesaugt, die anschließend in einem Luftfilter 7 gereinigt und daraufhin in einen Frischgasverdichter 8, der Teil eines Abgasturboladers ist, geführt wird. Zuvor kann die Luft mit Abgas, das zur Erzielung einer Niederdruck-Abgasrückführung über eine Abgasrückführleitung 9 geführt wurde, vermischt werden, wodurch dann dem Frischgasverdichter 8 Frischgas, das eine Mischung aus Luft und rückgeführtem Abgas ist, zugeführt wird. Die Abgasrückführleitung 9 zweigt aus einem Abgasstrang 10 und konkret stromab einer in diesen Abgasstrang 10 integrierten Abgasturbine 11, die ebenfalls Teil des Abgasturboladers ist, ab und mündet stromauf des Frischgasverdichters 8 in den Frischgasstrang 5. In die Abgasrückführleitung 9 ist noch ein Abgaskühler 12 sowie ein mittels der Steuerungsvorrichtung 4 ansteuerbares Abgasrückführventil 13 integriert. Mittels des Abgaskühlers 12 kann das rückgeführte Abgas gekühlt werden, um u.a. die thermische Belastung des Frischgasverdichters 8 gering zu halten. Mittels des Abgasrückführventils 13 kann die Menge des über die Abgasrückführleitung 19 geführten Abgases beeinflusst beziehungsweise gesteuert werden.

Um jederzeit im Betrieb der Brennkraftmaschine ein ausreichendes Druckgefälle über der Abgasrückführleitung 9 einstellen zu können, ist in den Frischgasstrang 5 in einen Abschnitt, der zwischen dem Luftfilter 7 und der Mündung 14 der Abgasrückführleitung 9 gelegen ist, eine Steuerklappe 15 integriert, die ebenfalls mittels der Steuerungsvorrichtung 4 ansteuerbar ist. Durch ein zunehmendes Schließen dieser Steuerklappe 15, wodurch diese den dortigen freien Strömungsquerschnitt des Frischgasstrangs 5 zunehmend verkleinert, kann im Bereich stromab der Strömungsklappe 15 und damit im Bereich der Mündung 14 der Abgasrückführleitung 9 ein Unterdruck erzeugt werden, der insbesondere auch dann einen ausreichendes Druckgefälle über der Abgasrückführleitung 9 sicherstellt, wenn durch den Frischgasverdichter 8 kein oder nur ein geringer Ladedruck in der Ladeluftstrecke (d.h. in dem Abschnitt des Frischgasstrangs 5, der zwischen dem Frischgasverdichter 8 und dem Verbrennungsmotor 1 gelegen ist) mit der entsprechenden Sogwirkung auf der stromaufwärtigen Seite des Frischgasverdichters 8 erzeugt wird.

Das Frischgas wird mittels des Frischgasverdichters 8 verdichtet, anschließend in einem Ladeluftkühler 16 gekühlt und dann, gesteuert mittels Einlassventilen 17, den Brennräumen zugeführt. Der Antrieb des Frischgasverdichters 8 erfolgt mittels der Abgasturbine 11. Abgas, das bei der Verbrennung der Kraftstoff-Frischgas-Gemischmengen in den Brennräumen des Verbrennungsmotors 1 entstanden ist, wird, gesteuert mittels Auslassventilen 18, aus dem Verbrennungsmotor 1 und über den Abgasstrang 10 abgeführt. Dabei durchströmt das Abgas die Abgasturbine 11. Dies führt in bekannter Weise zu einem rotierenden Antrieb eines Turbinenlaufrads (nicht dargestellt) der Abgasturbine 11, das über eine Welle 19 drehfest mit einem Verdichterlaufrad (nicht dargestellt) des Frischgasverdichters 8 verbunden ist.

Um bei einem Betrieb des Verbrennungsmotors 1 mit variierenden Lasten und Drehzahlen eine möglichst optimale Nutzung der Enthalpie des Abgases zur Erzeugung von Verdichtungsleistung mittels des Abgasturboladers zu realisieren, kann die Abgasturbine 11 eine mittels der Steuerungsvorrichtung 4 ansteuerbare Vorrichtung zur variablen Turbinenanströmung (VTG) 20 umfassen. Diese kann in bekannter Weise eine Mehrzahl von in einem Einlasskanal der Abgasturbine 11 angeordneten Leitschaufeln umfassen, die individuell drehbar ausgebildet sind, wobei diese gemeinsame mittels einer Verstellvorrichtung verstellbar sind. In Abhängigkeit von den Drehstellungen der Leitschaufeln verengen diese den freien Strömungsquerschnitt in einem Einlasskanal der Abgasturbine 11 mehr oder weniger und beeinflussen zudem den Abschnitt der primären Anströmung des Turbinenlaufrads und die Ausrichtung dieser Anströmung. Alternativ kann die Abgasturbine aber auch ohne VTG und mit oder ohne Wastegate ausgestaltet sein.

Stromab des Frischgasverdichters 8 und des Ladeluftkühlers 16 ist in die Ladeluftstrecke des Frischgasstrangs 5 eine ebenfalls mittels der Steuerungsvorrichtung 4 ansteuerbare Drosselklappe 21 integriert.

Um den Frischgasstrang 5 und konkret denjenigen Abschnitt des Frischgasstrangs 5, der zwischen der Steuerklappe 15 und den Einlassventilen 17 des Verbrennungsmotors 1 gelegen ist, hinsichtlich des Vorliegens einer Leckage zu überprüfen, ist erfindungsgemäß vorgesehen, dass nach einer Anforderung einer solchen Diagnose mittels der Steuerungsvorrichtung 4, was beispielsweise einmalig nach jeder Inbetriebnahme der Brennkraftmaschine vorgesehen sein kann, in einem Betriebszustand der Brennkraftmaschine ohne mittels des Frischgasverdichters 8 bewirkter Ladedruckerzeugung, insbesondere während eines Leerlauf- oder Schubbetriebs des Verbrennungsmotors 1, die Steuerklappe 15 so weit geschlossen wird, dass durch den noch laufenden Verbrennungsmotor 1 in dem genannten Abschnitt ein Unterdruck im Vergleich zu dem Umgebungsdruck erzeugt wird. Diese Erzeugung eines Unterdrucks basiert auf der durch die zyklische Bewegung der Kolben 3 und dem zyklischen Öffnen und Schließen der Einlassventile 17 und der Auslassventile 18 bewirkten Funktion des Verbrennungsmotors, Frischgas aus dem Frischgasstrang 5 anzusaugen und in den Abgasstrang 10 auszustoßen, was auch dann erfolgt, wenn der Verbrennungsmotor 1 im Schubbetrieb betrieben wird, in dem in den Brennräumen keine Frischgas-Kraftstoff-Gemischmengen verbrannt werden.

Eine solche Diagnose kann auch passiv initiiert werden, d.h. diese wird nicht aktiv aufgrund des Vorliegens bestimmter Parameter von der Steuereinheit angefordert. In diesem Fall kann der entsprechende Betriebszustand der Brennkraftmaschine insbesondere stochastisch eingestellt werden.

Während dieser Erzeugung eines Unterdrucks wird das Abgasrückführventil 13 vollständig geschlossen, um ein Rückführen von Abgas über die Abgasrückführleitung 9 zu vermeiden, was ansonsten der gewollten Erzeugung eines Unterdrucks in dem Frischgastrang 5 entgegenwirken würde. Weist der Verbrennungsmotor 1 eine Funktionalität für einen Teilbetrieb, bei dem dieser grundsätzlich mit lediglich einem Teil der insgesamt zur Verfügung stehenden Brennräume betrieben werden kann (sogenannte Zylinderabschaltung), sollte zudem vorgesehen sein, diese Funktionalität zu deaktivieren, um eine möglichst große Saugwirkung des Verbrennungsmotors 1 zu erreichen.

In Abhängigkeit von der konkret eingestellten Schließstellung der Steuerklappe 15 und der Betriebsdrehzahl des Verbrennungsmotors 1 sollte sich nach einer definierten Zeitspanne ein definierter Wert oder Wertebereich für den (Unter-)Druck in dem genannten Abschnitt des Frischgasstrangs 5 eingestellt haben, was in der Steuervorrichtung 4 als Sollwert abgespeichert ist. Wird dieser Sollwert zumindest annähernd erreicht, was mittels mindestens eines in den genannten Abschnitt des Frischgasstrangs 5 integrierten Drucksensors 22 gemessen wird (Ermittlung eines Istwerts), wird davon ausgegangen, dass in dem genannten Abschnitt des Frischgasstrangs 5 keine Leckage vorliegt. Die Diagnose ist damit, gegebenenfalls nach einer Speicherung dieses Diagnoseergebnisses in der Steuerungsvorrichtung 4, beendet.

Wird dagegen der Sollwert nicht erreicht beziehungsweise unterscheidet sich der ermittelte Istwert in einem größeren Maße, als über eine Toleranzdifferenz vorgegeben ist, von dem Sollwert, wird von einer Leckage des Frischgasstrangs 5 in dem genannten Abschnitt ausgegangen und ein entsprechender Fehlereintrag in der Steuerungsvorrichtung 4 abgespeichert. Dieser Fehlereintrag kann anschließend im Rahmen einer Wartung der Brennkraftmaschine beziehungsweise eines die Brennkraftmaschine umfassenden Kraftfahrzeugs ausgelesen und als Anlass für eine Reparatur des Frischgasstrangs 5 dienen. Zusätzlich dazu kann vorgesehen sein, dass für den sich an die Diagnose anschließenden Betrieb der Brennkraftmaschine mittels der Steuerungsvorrichtung 4 auf ein Notlaufprogramm umgeschaltet wird, in dem Maßnahmen vorgesehen sind, durch die eine Überschreitung einer zulässigen Maximaldrehzahl des Frischgasverdichters 8 beziehungsweise des Abgasturboladers vermieden wird. Um ein Überschreiten einer zulässigen Maximaldrehzahl des Abgasturboladers zu vermeiden, kann u.a. eine veränderte Ansteuerung der VTG 16 (oder eines Wastegateventils) mit dem Ziel einer zumindest temporär verringerten Nutzung der zur Verfügung stehenden Abgasenthalpie in der Abgasturbine vorgesehen sein.

### Bezugszeichenliste

- 1: Verbrennungsmotor
- 2: Zylinder
- 3: Kolben
- 4: Steuerungsvorrichtung
- 5: Frischgasstrang
- 6: Ansaugmündung
- 7: Luftfilter
- 8: Frischgasverdichter
- 9: Abgasrückführleitung
- 10: Abgasstrang
- 11: Abgasturbine
- 12: Abgaskühler
- 13: Abgasrückführventil
- 14: Mündung der Abgasrückführleitung
- 15: Steuerklappe
- 16: Ladeluftkühler
- 17: Einlassventil
- 18: Auslassventil
- 19: Welle
- 20: Vorrichtung zur variablen Turbinenanströmung (VTG)
- 21: Drosselklappe
- 22: Drucksensor

## Patentansprüche

1. Verfahren zur Diagnose einer Brennkraftmaschine mit einem Verbrennungsmotor (1) und einem Frischgasstrang (5), über den dem Verbrennungsmotor (1) Frischgas zuführbar ist, wobei in den Frischgasstrang (5) ein Frischgasverdichter (8) und stromauf des Frischgasverdichters (8) eine Steuerklappe (15) integriert sind, **dadurch gekennzeichnet, dass** die Steuerklappe (15) so weit geschlossen wird, dass durch den laufenden Verbrennungsmotor (1) in dem zwischen der Steuerklappe (15) und dem Verbrennungsmotor (1) liegenden Abschnitt des Frischgasstrangs (5) ein Unterdruck im Vergleich zu dem Umgebungsdruck erzeugt wird, wobei ein diesem Unterdruck zugeordneter Istwert mit einem Sollwert verglichen wird und das Vorliegen oder das Nicht-Vorliegen einer Leckage in diesem Abschnitt des Frischgasstrangs (5) aus einer Differenz zwischen dem Istwert und dem Sollwert abgeleitet wird.

2. Verfahren gemäß Anspruch 1, **dadurch gekennzeichnet, dass** bei einer definierten Stellung der Steuerklappe (15) ein Druck-Istwert mit einem Druck-Sollwert verglichen wird oder bei einem auf einen definierten Druckwert eingestellten Unterdruck eine Ist-Stellung der Steuerklappe (15) mit einer Sollstellung der Steuerklappe (15) verglichen wird.

3. Verfahren gemäß Anspruch 1 oder 2, **gekennzeichnet durch** die Durchführung in einem Betriebszustand der Brennkraftmaschine ohne mittels des Frischgasverdichters (8) bewirkter Ladedruckerzeugung.

4. Verfahren gemäß Anspruch 3, **dadurch gekennzeichnet, dass** bei einer Anforderung der Diagnose mit der Durchführung gewartet wird, bis unaufgefordert ein Betriebszustand der Brennkraftmaschine ohne mittels des Frischgasverdichters (8) bewirkter Ladedruckerzeugung vorliegt oder bei einer Anforderung der Diagnose aktiv ein Betriebszustand der Brennkraftmaschine ohne mittels des Frischgasverdichters (8) bewirkter Ladedruckerzeugung eingestellt wird.

5. Verfahren gemäß einem der vorhergehenden Ansprüche, **gekennzeichnet durch** die Anwendung bei einer Brennkraftmaschine, bei der in den Frischgasstrang (5) eine Abgasrückführleitung (9) mündet, die aus einem Abgasstrang (10), über den Abgas von dem Verbrennungsmotor (1) abführbar ist, abgeht, wobei während der Erzeugung des Unterdrucks ein in die Abgasrückführleitung (9) integriertes Abgasrückführventil (13) zumindest teilweise geschlossen gehalten wird.

6. Verfahren gemäß Anspruch 5, **gekennzeichnet durch** die Anwendung bei einer Brennkraftmaschine, bei der die Abgasrückführleitung (9) in einen zwischen der Steuerklappe (15) und dem Frischgasverdichter (8) liegenden Abschnitt des Frischgasstrangs (5) mündet.

7. Verfahren gemäß einem der vorhergehenden Ansprüche, **gekennzeichnet durch** die Anwendung bei einer Brennkraftmaschine, bei der in den zwischen dem Frischgasverdichter (8) und dem Verbrennungsmotor (1) liegenden Abschnitt des Frischgasstrangs (5) eine Drosselklappe (21) integriert ist, wobei die Drosselklappe (21) während der Erzeugung des Unterdrucks zumindest teilweise geöffnet gehalten wird.

8. Verfahren gemäß einem der vorhergehenden Ansprüche, **dadurch gekennzeichnet, dass** bei einer Erkennung einer Leckage ein Fehlereintrag in einem Fehlerspeicher generiert wird.

9. Verfahren gemäß einem der vorhergehenden Ansprüche, **dadurch gekennzeichnet, dass** bei einer Erkennung einer Leckage Maßnahmen zur Begrenzung der Antriebsdrehzahl des Frischgasverdichters (8) eingeleitet werden.

## Claims

1. Method for diagnosing an internal combustion engine with a combustion engine (1) and a fresh gas section (5), via which fresh gas can be fed to the combustion engine (1), a fresh gas compressor (8) and, upstream of the fresh gas compressor (8), a control valve (15) being integrated into the fresh gas section (5), **characterized in that** the control valve (15) is closed to such an extent that a negative pressure in comparison with the ambient pressure is generated by way of the running combustion engine (1) **in that** portion of the fresh gas section (5) which lies between the control valve (15) and the combustion engine (1), an actual value which is assigned to this negative pressure being compared with a setpoint value, and the presence or the absence of a leak in this portion of the fresh gas section (5) being derived from a difference between the actual value and the setpoint value.

2. Method according to Claim 1, **characterized in that** a pressure actual value is compared with a pressure setpoint value in the case of a defined position of the control valve (15), or an actual position of the control valve (15) is compared with a setpoint position of the control valve (15) in the case of a negative pressure which is set to a defined pressure value.

3. Method according to Claim 1 or 2, **characterized by** being carried out in an operating state of the internal combustion engine without boost pressure generation by means of the fresh gas compressor (8).

4. Method according to Claim 3, **characterized in that**, in the case of the diagnosis being requested, carrying it out is paused until there is spontaneously an operating state of the internal combustion engine without boost pressure generation brought about by way of the fresh gas compressor (8), or, in the case of the diagnosis being requested, an operating state of the internal combustion engine without boost pressure generation brought about by means of the fresh gas compressor (8) is set in an active manner.

5. Method according to one of the preceding claims, **characterized by** being used in the case of an internal combustion engine, in the case of which an exhaust gas recirculation line (9) opens into the fresh gas section (5), which exhaust gas recirculation line (9) emanates from an exhaust gas section (10), via which exhaust gas can be discharged from the combustion engine (1), an exhaust gas recirculation valve (13) which is integrated into the exhaust gas recirculation line (9) being held at least partially closed during the generation of the negative pressure.

6. Method according to Claim 5, **characterized by** being used in the case of an internal combustion engine, in the case of which the exhaust gas recirculation line (9) opens into a portion of the fresh gas section (5) which lies between the control valve (15) and the fresh gas compressor (8).

7. Method according to one of the preceding claims, **characterized by** being used in the case of an internal combustion engine, in the case of which a throttle valve (21) is integrated into that portion of the fresh gas section (5) which lies between the fresh gas compressor (8) and the combustion engine (1), the throttle valve (21) being held at least partially open during the generation of the negative pressure.

8. Method according to one of the preceding claims, **characterized in that**, in the case of a detection of a leak, a fault entry is generated in a fault memory.

9. Method according to one of the preceding claims, **characterized in that**, in the case of a detection of a leak, measures for limiting the drive rotational speed of the fresh gas compressor (8) are initiated.

## Revendications

1. Procédé de diagnostic d'une machine thermique comprenant un moteur à combustion interne (1) et une conduite de gaz frais (5) par le biais de laquelle du gaz frais peut être amené au moteur à combustion interne (1), un compresseur de gaz frais (8) et un volet de commande (15), situé en amont du compresseur de gaz frais (8), étant intégrés dans la conduite de gaz frais (5), **caractérisé en ce que** le volet de commande (15) est fermé de façon à ce que le fonctionnement du moteur à combustion interne (1) génère une dépression, comparée à la pression ambiante, dans la portion de la conduite de gaz frais (5) qui est située entre le volet de commande (15) et le moteur à combustion interne (1), une valeur réelle associée à cette dépression étant comparée à une valeur de consigne et la présence ou l'absence d'une fuite dans cette section de la conduite de gaz frais (5) étant déduite d'une différence entre la valeur réelle et la valeur de consigne.

2. Procédé selon la revendication 1, **caractérisé en ce que**, lorsqu'une position du volet de commande (15) est définie, une valeur de pression réelle est comparée à une valeur de pression de consigne ou, lorsqu'une dépression est réglée à une valeur de pression définie, une position réelle du volet de commande (15) est comparée à une position de consigne du volet de commande (15).

3. Procédé selon la revendication 1 ou 2, **caractérisé par** la mise en œuvre de la machine thermique dans un état de fonctionnement sans génération de pression de suralimentation par le compresseur de gaz frais (8).

4. Procédé selon la revendication 3, **caractérisé en ce que**, lorsque le diagnostic est demandé, la mise en œuvre est attendue jusqu'à la présence spontanée d'un état de fonctionnement de la machine thermique sans génération de pression de suralimentation provoqué par le compresseur de gaz frais (8) ou, lorsque le diagnostic est demandé, un état de fonctionnement de la machine thermique est réglé de manière active sans génération de pression de suralimentation par le compresseur de gaz frais (8).

5. Procédé selon l'une des revendications précédentes, **caractérisé par** l'application dans une machine thermique, dans laquelle une conduite de recirculation de gaz d'échappement (9), qui part d'une conduite de gaz d'échappement (10) par le biais de laquelle des gaz d'échappement peuvent être prélevés sur le moteur à combustion interne (1), débouche dans la conduite de gaz frais (5), une soupape de recirculation de gaz d'échappement (13) intégrée dans la conduite de recirculation de gaz d'échappement (9) étant maintenue au moins partiellement fermée pendant la génération de la dépression.

6. Procédé selon la revendication 5, **caractérisé par** l'application dans une machine thermique, dans laquelle la conduite de recirculation de gaz d'échappement (9) débouche dans une portion de la conduite de gaz frais (5) située entre le volet de commande (15) et le compresseur de gaz frais (8).

7. Procédé selon l'une des revendications précédentes, **caractérisé par** l'application dans une machine thermique, dans laquelle un clapet d'étranglement (21) est intégré dans la portion de la conduite de gaz frais (5) située entre le compresseur de gaz frais (8) et le moteur à combustion interne (1), le clapet d'étranglement (21) étant maintenu au moins partiellement ouvert pendant la génération de la dépression.

8. Procédé selon l'une des revendications précédentes, **caractérisé en ce qu'**une entrée d'erreur est générée dans une mémoire d'erreurs lorsqu'une fuite est détectée.

9. Procédé selon l'une des revendications précédentes, **caractérisé en ce que**, lorsqu'une fuite est détectée, des mesures sont prises pour limiter la vitesse d'entraînement en rotation du compresseur de gaz frais (8).
